# EUROPEAN PATENT SPECIFICATION

(11) **EP 3 560 326 B1**
(45) Date of publication and mention of the grant of the patent: **24.02.2021**
(21) Application number: 18900557.2
(22) Date of filing: 14.03.2018
(51) Int. Cl.: A01G 25/16, B05B 13/02, A01G 25/02

(54) **SPRAYER FOR IMPLEMENTING HIGH ATOMIZING EFFECT UNDER LOW-PRESSURE CONDITION**
SPRAYER ZUR IMPLEMENTIERUNG EINES HOCHZERSTÄUBENDEN EFFEKTS UNTER NIEDRIGDRUCKBEDINGUNGEN
PULVÉRISATEUR POUR LA MISE EN OEUVRE D'UN EFFET D'ATOMISATION ÉLEVÉ DANS DES CONDITIONS DE BASSE PRESSION

(30) Priority: 29.01.2018 CN 201810084941
(43) Date of publication of application: 30.10.2019
(73) Proprietor: Jiangsu University, Zhenjiang, Jiangsu 212013 (CN)
(72) Inventor: YUAN, Shouqi, Zhenjiang, Jiangsu 212013 (CN); ZHU, Xingye, Zhenjiang, Jiangsu 212013 (CN); WANG, Xinkun, Zhenjiang, Jiangsu 212013 (CN); ZHANG, Linguo, Zhenjiang, Jiangsu 212013 (CN); LU, Mengya, Zhenjiang, Jiangsu 212013 (CN)
(74) Representative: Von Rohr Patentanwälte Partnerschaft mbB
(86) International application number: PCT/CN2018/078896
(87) International publication number: WO 2019/144477

(56) References cited:
- CN-A- 107 321 521
- CN-U- 85 202 851
- CN-U- 204 443 847
- CN-U- 205 052 604
- CN-U- 205 390 128
- CN-U- 206 199 553
- CN-U- 206 866 465
- JP-A- 2004 050 128
- JP-A- 2008 029 986
- RU-C1- 2 548 886
- SU-A1- 1 429 991

## Description

### I. Technical Field

The present invention relates to a key apparatus of micro-irrigation system for water-saving irrigation, which is suitable for solving the problem that the sprinkler fails to realize good atomization and results in poor uniformity under a low pressure condition, and particularly relates to a sprinkler for achieving a high atomization effect under a low pressure condition.

### II. Background Art

Atomization technology is widely applied in production and life, such as mechanical fuel combustion, agricultural production and medical treatment, etc. Micro-irrigation technique is one of the key techniques in water-saving irrigation. In agricultural production, atomizing sprinklers are usually used for atomizing pesticide application and atomizing air humidification, etc. Mechanical sprinklers are widely applied, and mainly include direct spray nozzles, simple centrifugal nozzles, impinging nozzles and wide-range centrifugal nozzles. However, for most nozzles, under a low pressure (lower than 0.1MPa) working condition, jet flow of the sprinkler is in the shape of water column or water droplet, so it is hard to realize droplets fragmentation and a poor atomization effect is caused. Moreover, under a low working pressure (lower than 0. IMPa), sprinkling via a single nozzle also has the problem of poor uniformity. Therefore, it is of great significance to develop a sprinkler for achieving a high atomization effect under a low pressure condition, in order to improve the poor atomization effect under a low pressure (lower than 0.1MPa) condition, overcome the technical difficulty of achieving a good atomization effect at a lower pressure and improve the uniformity of atomized droplets.

CN 205390128 U discloses a portable sprayer, which includes a protective shell device, a water storage device, a water pumping device, a conveying device and a spray device. The portable sprayer is arranged above the protective shell device, and the bottom of the protective shell device is connected through a bearing. The pumping device is provided with a water pump, the water pump is connected to the water storage device through a water pumping pipe, a lithium battery for power is provided beside the water pump and a water adding pipe is provided beside the water storage device. CN 204443847 U discloses an automatic spraying system for orchard, including a spraying device and a fan, wherein the system also includes a guide rail located in the orchard park, the guide rail is provided with a transport vehicle that can slide on the guide rail, the spraying device and the fan are fixed on a transport vehicle and the transport vehicle includes a fixed frame and rollers.

CN 85 2 02851 U discloses a rotating sprinkling head in the prior art has the disadvantages of complicated structure, high fabrication cost, difficult maintenance, etc. The utility model is characterized in that the jet action of the water is directly utilized to impulse the rotation of a vane wheel, and the vane wheel is a sprinkling element.

SU 1429991 A1 discloses a sprinkler containing a vertical riser, connected through a rotary mechanism to a barrel, forming an angle from 90-130° and ending with a nozzle. The nozzle is multi-jet with the outlet openings at different angles to the axis of the riser and nozzle.

### III. Contents of the Invention

The object of the present invention is to provide a sprinkler for achieving a high atomization effect under a low pressure condition, which can improve the atomization effect of nozzles under low pressure (0.1MPa) working condition, and has advantages of simple structure, convenient operation, flexible use, high atomization effect, good atomization uniformity, and energy saving, etc. In the present invention, the jet water column or water droplets can be fragmented conveniently and reliably at the outlet of the fluidic element, thereby achieving the high atomization effect under a low pressure condition, and solving the problem of poor atomization effect and poor uniformity of mechanical sprinklers under a low pressure condition.

The above object is achieved according to the present invention with a sprinkler having the features of claim 1. Beneficial aspects are described in the subclaims.

The technical scheme of the present invention is as follows:
A sprinkler for achieving a high atomization effect under a low pressure condition and for water-saving irrigation is provided comprising: a threaded connecting pipe, a low-pressure fine atomizing nozzle, a small motor fan, a storage battery pack, a top slotted bracket, a bottom slotted bracket with an U-shaped slot, a screw rod, and adjustable screw nuts, wherein the low-pressure fine atomizing nozzle is connected to the threaded connecting pipe and atomization pressure is adjusted via a valve; wherein the low-pressure fine atomizing nozzle is disposed at the outlet of the threaded connecting pipe to jet water flow; wherein the small rotor fan is disposed vertically opposite to the low-pressure fine atomizing nozzle; wherein the bottom slotted bracket is connected with the top slotted bracket via the screw rod and the vertical distance between the two slotted brackets can be adjusted by turning the adjustable screw nut; wherein the screw rod is disposed in parallel on one side of the threaded connecting pipe; wherein the top end of the screw rod is connected to the threaded connecting pipe via the top slotted bracket; wherein the bottom slotted bracket is disposed at the bottom end of the screw rod; wherein the small motor fan is disposed on the bottom slotted bracket and comprises a small motor and a m-blade propeller fan; wherein the small motor fan can move left and right in the U-shaped slot of the bottom slotted bracket to adjust the lateral distance from the low-pressure fine atomizing nozzle; wherein the adjustable screw nut can be screwed up and down on the screw rod to adjust the axial distance between the small motor fan and the low-pressure fine atomizing nozzle; and wherein the storage battery pack supplies power to the small motor fan.

The top slotted bracket comprises a pipe fitting hole and a support plate, and the diameter of the pipe fitting hole is greater than the diameter of the threaded connecting pipe, so that the top slotted bracket can move up and down on the threaded connecting pipe; the pipe fitting hole has a threaded hole in its wall surface, and the top slotted bracket can be fixed by screwing in and out of a bolt with appropriate size in the threaded hole; the support plate is disposed at the other end of the top slotted bracket and has a U-shaped slot X, so that the screw rod can move left and right in the top slotted bracket. An U-shaped slot Y is provided at one end of the bottom slotted bracket, to realize left and right movement and fixing of the small motor fan; an open hole is provided at the other end of the bottom slotted bracket, via which the screw rod is connected between the top slotted bracket and the bottom slotted bracket; the storage battery pack is fixed on one end of the bottom slotted bracket near the open hole, and comprises a battery case that contains n dry battery cells and is disposed at the lower end of the bottom slotted bracket via waterproof wires.

The low-pressure fine atomizing nozzle is connected to the desired threaded connecting pipe via threads, and the pressure can be adjusted by controlling a pressure regulating valve manually or automatically; the fan motor supported by a lateral support frame is disposed right below the sprinkler, and the atomized droplets are fragmented again under the counterforce of impact on the fan plane; the vertical axial distance between the fan and the low-pressure fine atomizing nozzle may be adjusted by moving the adjustable screw nut up or down along the screw rod, so as to achieve the ideal atomization effect at different low pressures; the small motor is powered by the storage battery pack on the right side of the lateral support frame through waterproof wires that run below the slotted bracket to prevent water intrusion.

The small motor fan consists of a small motor and a fan, wherein, the fan is made of a plastic material and has an m-blade propeller with a diameter greater than or equal to the outer diameter of the small motor. The m-blade propeller is a propeller with one or more blades.

The storage battery pack is provided in a battery case which contains n dry battery cells, and supplies power to the small motor via waterproof wires, the waterproof wires run below the slotted bracket to avoid influence by the atomized droplets and ensure connection reliability. The n dry battery cells mean one or more dry battery cells.

The slotted bracket is made of cast iron material and consists of a top slotted bracket and a bottom slotted bracket, a sleeve for the threaded connecting pipe is disposed at the left end of the top slotted bracket and has a threaded hole at the rim of the sleeve, and the height of the top slotted bracket can be fixed by screwing a bolt in and out of the threaded hole. The connecting sleeve has a U-shaped slot X. The bottom slotted bracket has a U-shaped slot Y at its left end and a hole with the same diameter as the screw rod at its right end, and the battery case can be fixed at the right of the hole. The screw rod is a cast iron pole with threads along its full length, and is provided with an adjustable screw nut at its top end and bottom end respectively, the distance between the bottom slotted bracket and the top slotted bracket can be adjusted by turning the adjustable screw nuts, so as to ensure appropriate distance between the installed small fan and the low-pressure fine atomizing nozzle and thereby achieve a better atomization effect.

The adjustable screw nut is made of cast iron material, its middle is a screw nut with the same diameter as the threaded rod, and two small iron plates are welded to the top end of the screw nut.

The present invention has the advantages of simple structure, convenient adjustment, realizing effective fragmentation of atomized droplets under a low pressure condition to ensure the quality of atomization, and having a highly adjustable structure to meet the requirement for different atomization effects.

### IV. Description of Drawings

Fig. 1 is a schematic structural diagram of the sprinkler for achieving a high atomization effect under a low pressure condition;
Fig. 2 shows schematic structural diagrams of the top slotted bracket, wherein, (a) is a front view of the top slotted bracket; (b) is a top view of the top slotted bracket;
Fig. 3 is a schematic structural diagram of the bottom slotted bracket.

In the figures: 1 - precision digital pressure gauge; 2 - threaded connecting pipe; 3 - valve; 4 - slotted bracket; 5 - screw rod; 6 - low-pressure fine atomizing nozzle; 7 - small motor fan; 8 - adjustable screw nut; 9 - storage battery pack; 10 - threaded hole; 11 - pipe fitting hole; 12 - support plate; 13 - U-shaped slot X; 14 - U-shaped slot Y; 15 - open hole

### V. Embodiments

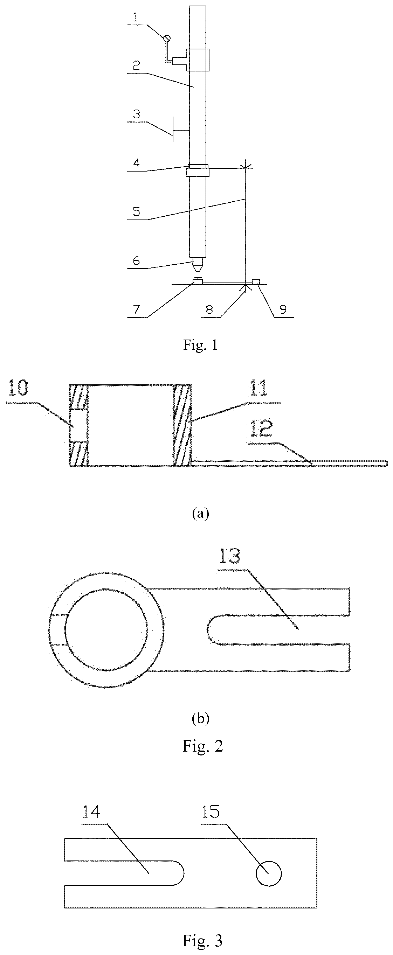

As shown in Figs. 1-3, three threaded connecting pipes 2 in length of 100 mm are connected to each other by threads, and a precision digital pressure gauge 1 is connected therebetween to observe the water pressure, and the required water flow pressure can be achieved by adjusting and controlling the valve 3. The low-pressure fine atomizing nozzle 6 is disposed at the outlet of the threaded connecting pipe 2 to jet water flow. A small motor fan 7 is disposed vertically opposite to the low-pressure fine atomizing nozzle 6. The small motor fan 7 consists of a small motor and a fan, wherein, the fan is made of plastic material and has a four-blade propeller, the diameter thereof may be selected according to the required atomization effect, such as 30mm, 40mm, 45mm, or 56mm. The small motor adopts a Model 130 motor, the motor specification is 15.5^{∗}20.3mm, the motor height is 25mm, the diameter of output shaft is 2.0mm, the output shaft length is 8mm, the rated voltage is 6V, the rotation speed is about 10,000rpm, and the weight is about 20g. To further achieve the secondary fragmentation of the jet flow at the nozzle, the small motor fan 7 rotates as the motor is powered by a storage battery pack 9 (a battery case containing four AA dry battery cells, with a cover and a switch), so as to diverge the jet flow. Both the small motor fan 7 and the storage battery pack 9 are fixed to the bottom slotted bracket, the bottom slotted bracket is connected with the top slotted bracket via a screw rod 5 (a cast iron pole in length of 15-20mm, with threads along its full length), and the vertical distance between the two slotted brackets can be adjusted by turning an adjustable screw nut 8. The height of the top slotted bracket can be adjusted by screwing and unscrewing of a bolt in a M8 threaded hole 10 in the wall of a pipe fitting hole 11.

The working process is as follows: for example, to sprinkle over a square land in side length of 2m, a low-pressure atomizing sprinkler is mounted via the threaded connecting pipe to a corresponding frame, and a water pipeline is connected; a threaded connecting pipe in different length may be selected according to the height, so as to adjust the height difference between the nozzle and the plant. An appropriate atomization pressure is realized by adjusting the valve with the aid of the precision digital pressure gauge, and the jet flow is diverged by means of the rotation action of the small motor fan, so as to achieve a good atomization effect. The axial distance between the small motor fan and the low-pressure fine atomizing nozzle can be adjusted by turning the adjustable screw nut on the screw rod, and the lateral distance between the fan and the nozzle can be adjusted by moving the screw rod in the U-shaped slot of the top slotted bracket.

In summary, the sprinkler for achieving a high atomization effect under a low pressure condition according to the present invention belongs to a modern agricultural micro-irrigation apparatus, and comprises a low-pressure fine atomizing nozzle, a small motor fan, a storage battery pack, slotted brackets, a screw rod and adjustable screw nuts, the components of the sprinkler are connected with each other via threads and bolts, and the slotted brackets have U-shaped slot to facilitate movement and fixation of the small motor fan and the storage battery pack; the low-pressure atomizing sprinkler can realize the height adjustment of the sprinkler through threaded connection of the threaded connecting pipe according to the height of the plant to be sprinkled, and the operation is simple. Effective atomization can be achieved under a low pressure (lower than 0.1MPa) condition and atomization uniformity can be improved by the action of the small motor fan. The sprinkler for achieving a high atomization effect under a low pressure condition is convenient to assemble, the user can quickly install the sprinkler and achieve different atomization effects according to the requirement, so that a single apparatus has multiple functions and effectively overcome drawbacks of the mechanical operation and only functioning in pressure adjustment of the agricultural atomizing sprinklers in the prior art, and it is convenient and flexible to use.

In the description of the present invention, the expressions of reference terms "an embodiment", "some embodiments", "exemplary embodiment", "an example", "specific example" or "some examples" mean that the specific features, structures, materials or characteristics described in the embodiments or examples are included in at least one embodiment or example of the present invention. In this description, the exemplary expression of the above terms may not necessarily refer to the same embodiment or example. Moreover, the specific features, structures, materials or characteristics described can be combined in any one or more embodiments or examples in a suitable manner.

While the embodiments of the present invention has been illustrated and described, the person skilled in the art can understand that various variations, amendments, substitutions and modifications can be made to the embodiments without departing from the scope of the appended claims.

## Claims

1. A sprinkler for achieving a high atomization effect under a low-pressure condition and for water-saving irrigation, comprising
a threaded connecting pipe (2),
a low-pressure fine atomizing nozzle (6),
a small motor fan (7),
a storage battery pack (9),
a top slotted bracket,
a bottom slotted bracket with a U-shaped slot (14),
a screw rod (5), and
adjustable screw nuts (8),
wherein the low-pressure fine atomizing nozzle (6) is connected to the threaded connecting pipe (2) and atomization pressure is adjusted via a valve (3);
wherein the low-pressure fine atomizing nozzle (6) is disposed at the outlet of the threaded connecting pipe (2) to jet water flow;
wherein the small rotor fan (7) is disposed vertically opposite to the low-pressure fine atomizing nozzle (6);
wherein the bottom slotted bracket is connected with the top slotted bracket via the screw rod (5) and the vertical distance between the two slotted brackets can be adjusted by turning the adjustable screw nut (8);
wherein the screw rod (5) is disposed in parallel on one side of the threaded connecting pipe (2);
wherein the top end of the screw rod (5) is connected to the threaded connecting pipe (2) via the top slotted bracket;
wherein the bottom slotted bracket is disposed at the bottom end of the screw rod (5);
wherein the small motor fan (7) is disposed on the bottom slotted bracket and comprises a small motor and a m-blade propeller fan;
wherein the small motor fan (7) can move left and right in the U-shaped slot (14) of the bottom slotted bracket to adjust the lateral distance from the low-pressure fine atomizing nozzle (6);
wherein the adjustable screw nut (8) can be screwed up and down on the screw rod (5) to adjust the axial distance between the small motor fan (7) and the low-pressure fine atomizing nozzle (6); and
wherein the storage battery pack (9) supplies power to the small motor fan (7).

2. The sprinkler for achieving a high atomization effect under a low-pressure condition according to claim 1, **characterized in that** the top slotted bracket comprises a pipe fitting hole (11) and a support plate (12), wherein the diameter of the pipe fitting hole (11) is greater than the diameter of the threaded connecting pipe (2), so that the top slotted bracket can move up and down on the threaded connecting pipe (2);
the pipe fitting hole has a threaded hole (10) in its wall surface and the top slotted bracket can be fixed by screwing in and out of a bolt with appropriate size in the threaded hole (10);
the support plate (12) is disposed at the other end of the top slotted bracket and has a U-shaped slot X (13) so that the screw rod (5) can move left and right in the top slotted bracket.

3. The sprinkler for achieving a high atomization effect under a low-pressure condition according to claim 1 or 2, **characterized in that** the U-shaped slot Y (14) is provided at one end of the bottom slotted bracket to realize left and right movement and fixing of the small motor fan (7);
an open hole (15) is provided at the other end of the bottom slotted bracket via which the screw rod (5) is connected between the top slotted bracket and the bottom slotted bracket;
the storage battery pack (9) is fixed on one end of the bottom slotted bracket near the open hole (15) and comprises a battery case that contains n dry battery cells and is disposed at the lower end of the bottom slotted bracket via waterproof wires.

4. The sprinkler for achieving a high atomization effect under a low-pressure condition according to claim 1, 2, or 3, **characterized in that** the threaded connecting pipe (2) is connected with the low-pressure fine atomizing nozzle (6) via threads.

5. The sprinkler for achieving a high atomization effect under a low-pressure condition according to claim 1, 2, or 3, **characterized in that** the storage battery (9) is connected to the bottom slotted bracket by adhesive bonding.

6. The sprinkler for achieving a high atomization effect under a low-pressure condition according to claim 1, **characterized in that** the m-blade propeller is a propeller with one or more blades.

7. The sprinkler for achieving a high atomization effect under a low-pressure condition according to claim 1, **characterized in that** the n dry battery cells contain one or more dry battery cells.

## Patentansprüche

1. Sprinkler zur Erzielung eines hohen Zerstäubungseffekts unter Niederdruckbedingungen und zur wassersparenden Bewässerung, umfassend
ein Gewindeverbindungsrohr (2),
eine Niederdruck-Feinzerstäubungsdüse (6),
einen kleinen Motorventilator (7),
einen Akku-Pack (9),
eine obere geschlitzte Halterung,
eine untere geschlitzte Halterung mit einem U-förmigen Schlitz (14),
eine Gewindestange (5), und
einstellbare Schraubenmuttern (8),
wobei die Niederdruck-Feinzerstäubungsdüse (6) mit dem Gewindeverbindungsrohr (2) verbunden ist und der Zerstäubungsdruck über ein Ventil (3) eingestellt wird;
wobei die Niederdruck-Feinzerstäubungsdüse (6) am Auslass des Gewindeverbindungsrohrs (2) angeordnet ist, um einen Wasserstrom zu strahlen;
wobei der kleine Motorventilator (7) vertikal gegenüber der Niederdruck-Feinzerstäubungsdüse (6) angeordnet ist;
wobei die untere geschlitzte Halterung über die Gewindestange (5) mit der oberen geschlitzten Halterung verbunden ist und der vertikale Abstand zwischen den beiden geschlitzten Halterungen durch Drehen der einstellbaren Schraubenmutter (8) eingestellt werden kann;
wobei die Gewindestange (5) parallel auf einer Seite des Gewindeverbindungsrohres (2) angeordnet ist;
wobei das obere Ende der Gewindestange (5) über die obere geschlitzte Halterung mit dem Gewindeverbindungsrohr (2) verbunden ist;
wobei die untere geschlitzte Halterung am unteren Ende der Gewindestange (5) angeordnet ist;
wobei der kleine Motorventilator (7) auf der unteren geschlitzten Halterung angeordnet ist und einen kleinen Motor und einen m-Blatt-Propeller umfasst;
wobei der kleine Motorventilator (7) sich in dem U-förmigen Schlitz (14) der unteren geschlitzten Halterung nach links und rechts bewegen kann, um den seitlichen Abstand von der Niederdruck-Feinzerstäubungsdüse (6) einzustellen;
wobei die einstellbare Schraubenmutter (8) auf der Gewindestange (5) nach oben und unten geschraubt werden kann, um den axialen Abstand zwischen dem kleinen Motorventilator (7) und der Niederdruck-Feinzerstäubungsdüse (6) einzustellen; und wobei der Akku-Pack (9) den kleinen Motorventilator (7) mit Strom versorgt.

2. Sprinkler zur Erzielung eines hohen Zerstäubungseffekts unter Niederdruckbedingungen nach Anspruch 1, **dadurch gekennzeichnet, dass** die obere geschlitzte Halterung ein Rohranschlussloch (11) und eine Stützplatte (12) aufweist, wobei der Durchmesser des Rohranschlusslochs (11) größer ist als der Durchmesser des Gewindeverbindungsrohrs (2), so dass sich die obere geschlitzte Halterung auf dem Gewindeverbindungsrohr (2) auf und ab bewegen kann;
wobei das Rohranschlussloch ein Gewindeloch (10) in seiner Wandfläche aufweist und die obere geschlitzte Halterung durch Einschrauben und Herausschrauben eines Bolzens mit geeigneter Größe in das Gewindeloch (10) befestigt werden kann;
wobei die Stützplatte (12) am anderen Ende der oberen geschlitzten Halterung angeordnet ist und einen U-förmigen Schlitz X (13) aufweist, so dass sich die Gewindestange (5) in der oberen geschlitzten Halterung nach links und rechts bewegen kann.

3. Sprinkler zur Erzielung eines hohen Zerstäubungseffekts unter Niederdruckbedingungen nach Anspruch 1 oder 2, **dadurch gekennzeichnet, dass** der U-förmige Schlitz Y (14) an einem Ende des unteren geschlitzten Trägers vorgesehen ist, um eine Links- und Rechtsbewegung und Befestigung des kleinen Motorventilators (7) zu realisieren;
wobei ein offenes Loch (15) an dem anderen Ende der unteren geschlitzten Halterung vorgesehen ist, über das die Schraubstange (5) zwischen der oberen geschlitzten Halterung und der unteren geschlitzten Halterung verbunden ist;
wobei das Akku-Pack (9) an einem Ende der unteren geschlitzten Halterung in der Nähe des offenen Lochs (15) befestigt ist und ein Batteriegehäuse umfasst, das n Trockenbatteriezellen enthält und über wasserdichte Drähte am unteren Ende des unteren geschlitzten Trägers angeordnet ist.

4. Sprinkler zur Erzielung eines hohen Zerstäubungseffekts unter Niederdruckbedingungen nach Anspruch 1, 2 oder 3, **dadurch gekennzeichnet, dass** das Gewindeverbindungsrohr (2) über Gewinde mit der Niederdruck-Feinzerstäubungsdüse (6) verbunden ist.

5. Sprinkler zur Erzielung eines hohen Zerstäubungseffekts unter einer Niederdruckbedingung nach Anspruch 1, 2 oder 3, **dadurch gekennzeichnet, dass** das Akku-Pack (9) mit der unteren geschlitzten Halterung durch Kleben verbunden ist.

6. Sprinkler zur Erzielung eines hohen Zerstäubungseffekts unter einer Niederdruckbedingung nach Anspruch 1, **dadurch gekennzeichnet, dass** der m-Blatt-Propeller ein Propeller mit einem oder mehreren Blättern ist.

7. Sprinkler zur Erzielung eines hohen Zerstäubungseffekts unter Niederdruckbedingungen nach Anspruch 1, **dadurch gekennzeichnet, dass** die n Trockenbatteriezellen eine oder mehrere Trockenbatteriezellen enthalten.

## Revendications

1. Pulvérisateur pour la mise en œuvre d'un effet d'atomisation élevé dans des conditions de basse pression et pour une irrigation économisant de l'eau, comprenant
un tuyau de connexion fileté (2),
une buse d'atomisation fine à basse pression (6),
un petit ventilateur à moteur (7),
un pack de batteries d'accumulation (9),
un support fendu supérieur,
un support fendu inférieur comportant une fente en forme de U (14),
une barre à vis (5), et
des écrous à vis ajustables (8),
la buse d'atomisation fine à basse pression (6) étant connectée au tuyau de connexion fileté (2) et une pression d'atomisation étant ajustée par l'intermédiaire d'une soupape (3) ;
la buse d'atomisation fine à basse pression (6) étant disposée à la sortie de tuyau de connexion fileté (2) pour projeter un flux d'eau ;
le petit ventilateur à moteur (7) étant disposé verticalement à l'opposé de la buse d'atomisation fine à basse pression (6) ;
le support fendu inférieur étant connecté au support fendu supérieur par l'intermédiaire de la barre à vis (5) et la distance verticale entre les deux supports fendus pouvant être ajustée en tournant l'écrou à vis ajustable (8) ;
la barre à vis (5) étant disposée en parallèle sur une face du tuyau de connexion fileté (2) ;
l'extrémité supérieure de la barre à vis (5) étant connectée au tuyau de connexion fileté (2) par l'intermédiaire du support fendu supérieur ;
le support fendu inférieur étant disposé à l'extrémité inférieure de la barre à vis (5) ;
le petit ventilateur à moteur (7) étant disposé sur le support fendu inférieur et comprenant un petit moteur et un ventilateur à hélice à lame en M ;
le petit ventilateur à moteur (7) pouvant se déplacer vers la gauche et vers la droite dans la fente en forme de U (14) du support fendu inférieur pour ajuster la distance latérale depuis la buse d'atomisation fine à basse pression (6) ;
l'écrou à vis ajustable (8) pouvant être vissé vers le haut et vers le bas sur la barre à vis (5) pour ajuster la distance axiale entre le petit ventilateur à moteur (7) et la buse d'atomisation fine à basse pression (6) ; et
le pack de batteries d'accumulation (9) fournissant du courant au petit ventilateur à moteur (7).

2. Gicleur pour la mise en œuvre d'un effet d'atomisation élevé dans des conditions de basse pression selon la revendication 1, **caractérisé en ce que** le support fendu supérieur comprend un trou d'ajustement de tuyau (11) et une plaque support (12), le diamètre du trou d'ajustement de tuyau (11) étant supérieur au diamètre du tuyau de connexion fileté (2), de sorte que le support fendu supérieur peut monter et descendre sur le tuyau de connexion fileté (2) ;
le trou d'ajustement de tuyau comporte un trou fileté (10) dans sa surface de paroi et le support fendu supérieur peut être fixé par vissage à l'intérieur et à l'extérieur d'un boulon doté d'une taille appropriée dans le trou fileté (10) ;
la plaque support (12) est disposée à l'autre extrémité du support fendu supérieur et comporte une fente X en forme de U (13), de sorte que la barre à vis (5) peut se déplacer vers la gauche et la droite dans le support fendu supérieur.

3. Gicleur pour la mise en œuvre d'un effet d'atomisation élevé dans des conditions de basse pression selon la revendication 1 ou 2, **caractérisé en ce que** la fente Y en forme de U (14) est pratiquée à une extrémité du support fendu supérieur pour exécuter un mouvement vers la gauche et vers la droite et fixer le petit ventilateur à moteur (7) ;
un trou ouvert (15) est pratiqué à l'autre extrémité du support fendu supérieur par l'intermédiaire duquel la barre à vis (5) est connectée entre le support fendu supérieur et le support fendu inférieur ;
le pack de batteries d'accumulation (9) est fixé sur une extrémité du support fendu inférieur près du trou ouvert (15) et comprend un compartiment de batteries qui contient n cellules de batteries sèches et est disposée à l'extrémité inférieure du support fendu inférieur par l'intermédiaire de fils imperméables.

4. Gicleur pour la mise en œuvre d'un effet d'atomisation élevé dans des conditions de basse pression selon la revendication 1, 2, ou 3, **caractérisé en ce que** le tuyau de connexion fileté (2) est connecté à la buse d'atomisation fine à basse pression (6) par l'intermédiaire de filets.

5. Gicleur pour la mise en œuvre d'un effet d'atomisation élevé dans des conditions de basse pression selon la revendication 1, 2, ou 3, **caractérisé en ce que** la batterie d'accumulation (9) est connectée au support fendu inférieur par une liaison adhésive.

6. Gicleur pour la mise en œuvre d'un effet d'atomisation élevé dans des conditions de basse pression selon la revendication 1, **caractérisé en ce que** l'hélice à lame en M est une hélice comportant une ou plusieurs lames.

7. Gicleur pour la mise en œuvre d'un effet d'atomisation élevé dans des conditions de basse pression selon la revendication 1, **caractérisé en ce que** les n cellules de batteries contiennent une ou plusieurs cellules de batteries sèches.
